# EUROPÄISCHE PATENTSCHRIFT

(11) **EP 3 767 403 B1**
(45) Veröffentlichungstag und Bekanntmachung des Hinweises auf die Patenterteilung: **07.09.2022**
(21) Anmeldenummer: 19186559.1
(22) Anmeldetag: 16.07.2019
(51) Int. Cl.: G05B 19/042, G05B 23/02

(54) **MACHINE-LEARNING GESTÜTZTE FORM- UND OBERFLÄCHENMESSUNG ZUR PRODUKTIONSÜBERWACHUNG**
MACHINE LEARNING BASED SHAPE AND SURFACE MEASUREMENT FOR MONITORING PRODUCTION
MESURE DE FORME ET DE SURFACE ASSISTÉE PAR APPRENTISSAGE AUTOMATIQUE DESTINÉE À LA SURVEILLANCE DE PRODUCTION

(43) Veröffentlichungstag der Anmeldung: 20.01.2021
(73) Patentinhaber: Carl Zeiss Industrielle Messtechnik GmbH, 73447 Oberkochen (DE)
(72) Erfinder: MAYINGER, Philipp, 73430 Aalen (DE)
(74) Vertreter: LifeTech IP Spies & Behrndt Patentanwälte PartG mbB

(56) Entgegenhaltungen:
- DE-A1- 19 638 065
- DE-A1-102008 036 968
- DE-A1-102013 109 915
- DE-A1-102018 100 424

## Beschreibung

### HINTERGRUND

### Gebiet der Erfindung

Die Erfindung bezieht sich auf ein Qualitätsmessverfahren und insbesondere auf ein computer-implementiertes Verfahren zur Oberflächenqualitätsprüfung von Werkstücken, ein entsprechendes System sowie ein entsprechendes Computerprogrammprodukt.

### Technischer Hintergrund

Hersteller von mechanischen Werkstücken und Bauteilen unterliegen immer höheren Qualitätsanforderungen in Bezug auf die hergestellten Werkstücke. Dies bezieht sich einerseits auf das Volumenmaterial der Werkstücke andererseits aber auch auf deren Oberflächen. Die Weiterverarbeiter der Werkstücke schrauben die Anforderungen stückweise nach oben, da die Kunden immer perfektere Oberflächen benötigen. Dabei kann es sich um Motorenbauteile (zum Beispiel Zylinder-Innenwände für einen geringeren Energieverbrauch) oder Oberflächen von Gebrauchsgegenständen, deren optische Qualitätsanforderungen kontinuierlich zunehmen, handeln. Dazu kommt, dass derartige Bauteile oder Werkstücke häufig an mehreren Orten produziert werden und die Qualitätsanforderungen einheitlichen Kriterien unterliegen sollen.

Insbesondere bei Form- und Oberflächenmesstechniken, bei denen Messdaten von mehr als einer Dimension ausgewertet werden, ergibt sich aus verschiedenen Gründen das Problem einer schlechten Vergleichbarkeit von Messergebnissen verschiedener Setups, d.h. unter anderem verschiedener Mess- bzw. Produktionsorte.

Bei hohen Genauigkeitsanforderungen, ungünstigen Umgebungsbedingungen (stark schwankende Umweltparameter, eindringende Schwingungen, usw.) und oder störanfälligen Messgeräten muss bei dem zu erbringenden Nachweis der Messfähigkeit bei mehreren Sensoren, Messmethoden und Standorten gegenüber den Auftraggebern das ungünstigste Setup betrachtet werden, was häufig zu hohen Toleranzausnutzungen führt. Die Entscheidung, ob ein gemessenes Werkstück, das nah an so einer Toleranzgrenze liegt, innerhalb oder außerhalb der Toleranz liegt, kann nicht immer mit hoher Verlässlichkeit, mit begrenztem Aufwand und zu einem angemessenen Preis getroffen werden.

Dabei wird als Setup eine Kombination aus Standort, Messverfahren und Sensor bezeichnet. Die Vergleichbarkeit der Ergebnisse bezüglich der Produktionsüberwachung wird dann eingeschränkt, wenn mehrere Setups parallel verwendet werden. Die Gründe dafür sind, dass verschiedene Standorte unterschiedliche Umgebungsbedingungen haben, unterschiedliche Messmethoden (KMG, Roboter, ...) unterschiedliche mechanische Eigenschaften aufweisen und verschiedene Sensortechnologien (selbst wenn die gleichen Messgrößen ausgewertet werden) unterschiedliche Effekte, d.h., Messergebnisse, zeigen.

Folglich werden meistens die gleichen Messsysteme und Prinzipien innerhalb einer Produktionslinie für Messtechnikaufgaben genutzt, selbst wenn andere Technologien für bestimmte Einsatzzwecke vorteilhafter wären.

Die Gründe dafür, warum unterschiedliche Sensortechnologien unvermeidbar sind, sind vielfältig: beispielsweise können taktile Messungen Oberflächen verändern, optische Messungen können insbesondere an steilen Kanten und bei extremen Eigenschaften der Reflexivität Artefakte erzeugen, Kufen-basierte Scan-Systeme können durch die mechanische Filterung das Messprofil verfälschen, verschiedene Spot-/Messpunktgrößen können die Messergebnisse beeinflussen, Linien-und Flächensensoren können verschiedene Eigenschaften bewerten und Boden- /Geräteschwingungen können sich zusätzlich auswirken.

Für eine echte Vergleichbarkeit müssen diese Effekte gefiltert und korrigiert werden, was aufwändig, oft unzureichend und kostspielig ist. Außerdem müssen tolerierbare Oberflächendefekte wie Poren bei üblichen Messverfahren gefiltert werden.

Die Auswahl der richtigen Messgrößenparameter von Form- und Oberflächenmessungen sowie deren Toleranzen ist ein schwieriger und aufwändiger Prozess, der üblicherweise im Entwicklungs- und Konstruktionsprozess durchgeführt wird. Nicht selten werden dabei Gegebenheiten in der Produktion und funktionale Eigenschaften nicht ausführlich berücksichtigt. Darüber hinaus werden in den Konstruktionsplänen häufig nur traditionelle DIN- bzw. ISO-basierende Angaben eingefügt, so dass nicht standardisierte Parameter häufig nicht genutzt werden.

In diesem Kontext wurden bereits Informationen zu ähnlichen Konzepten veröffentlicht: So beschreibt das Dokument DE 10 2018 100 424 A1 ein Verfahren zur Steuerung und/oder Überwachung eines Prozessablauf in eine Maschine zum Bearbeiten von Werkstücken. Der Prozessablauf wird dabei periodisch für jedes Werkstück wiederholt. Eingangssignale werden einer Eingangsdatenerkennungseinheit und einer System-Verarbeitungseinheit ermittelt. Durch einen Big-Data-Vergleich eines Prozessablauf Datensatzes mit vorgegebenen Vergleichsdaten Wertprädikat tief festgelegt, wie die Steuerung des Prozessablauf ausgehend vom aktuellen Zeitpunkt optimiert werden kann.

Weiterhin beschreibt das Dokument DE 10 2008 036 968 A1 ein Diagnoseverfahren eines Prozessautomatisierungssystems bestehend aus zumindest einem Feldgerät, einer Steuer-/Regeleinheit und zumindest einem Feldbus. Das System führt dabei folgende Verfahrensschritte aus: In einer ein Lernphase werden Rohdaten von Messgrößen, Rohdaten von Stellgrößen und/oder Rohdaten von Zustandsgrößen der Feldgeräte oder der Prozesse als Eingangsgrößen erfasst und normiert abgespeichert. Außerdem werden in der ein Lernphase vom Anwender zumindest ein Parameter einem es Bedingung, zumindest ein Parameter eines Prozesszustandes und/oder zumindest ein Parameter eines Feldgerätezustands als Ausgabegrößen vorgegeben. Die Zustandsgrößen der Feldgeräte können dabei Einflussfaktoren auf die jeweilige Messung berücksichtigen.

Die DE102013109915 beschreibt ein Verfahren zur Überprüfung eines Inspektionssystems zur Erkennung von Oberflächendefekten eines Produktes, bei dem an die Oberfläche besondere Qualitätsanforderungen gestellt werden.

Daher besteht die zu Grunde liegende Aufgabe der hier vorgestellten Konzepte darin, ein Verfahren und ein System vorzuschlagen mit dem Qualitätsmaßstäbe eingehalten werden können, auch wenn die Produktion mit entsprechenden Messsystemen an unterschiedlichen Orten unter unterschiedlichen Umwelteinflüssen und ggfs. auch unterschiedlichen Messsystemen stattfindet.

### ÜBERSICHT ÜBER DIE ERFINDUNG

Diese Aufgabe wird durch die hier vorgeschlagenen Verfahren, das entsprechende System zur Oberflächenqualitätsprüfung und das zugehörige Computerprogrammprodukt entsprechend den unabhängigen Ansprüchen gelöst. Weitere Ausgestaltungen werden durch die jeweils abhängigen Ansprüche beschrieben.

Insbesondere können Ausführungsformen mindestens teilweise in Form eines entsprechenden Computerprogrammproduktes implementiert sein, auf welches durch ein Computer-nutzbares oder Computer-lesbares Medium zugegriffen werden kann, welches Programmcode zur Nutzung durch oder in Verbindung mit einem Computer oder Instruktionsausführungssystem aufweist. Für den Kontext dieser Beschreibung kann ein Computer-nutzbares oder Computer-lesbares Medium jede Vorrichtung sein, die Mittel zum Speichern, Kommunizieren, Weiterleiten oder Transportieren des Programms für eine Nutzung durch oder in Verbindung mit einem Instruktionsausführungssystem, einer entsprechenden Vorrichtung oder Apparatur aufweist.

Das Computer-implementierte Verfahren zur Oberflächenqualitätsprüfung von Werkstücken weist mehrere Vorteile und technische Effekte auf, die auch entsprechend für das zugehörige System gelten können:

Das vorgeschlagene Konzept adressiert das grundsätzliche Problem bei Qualitätsmessprojekten bei denen Messdaten von mehr als einer Dimension ausgewertet werden und bei dem Messergebnisse unterschiedlicher Setups schlecht miteinander vergleichbar sind.

Zu hohe Toleranzausnutzungen bedingt durch unterschiedliche Standorte für eine Produktion gleicher Werkstücke, die durch unterschiedliche Setups gekennzeichnet sind, ist nicht mehr erforderlich. Vielmehr kann anhand des vorgeschlagenen Verfahrens viel besser ermittelt werden, ob ein gemessenes Teil, das nah an einer Toleranzgrenze liegt, innerhalb oder außerhalb dieser Toleranz liegt.

Die unterschiedlichen Umgebungsparameterwerte der unterschiedlichen Setups werden dabei entsprechend berücksichtigt. Außerdem können diejenigen Klassifikationen des zweiten Messschrittes, der auf diejenigen klassifizierten Werkstücke angewendet wird, bei denen das Qualitätsmesssystem nicht eindeutig in eine Gut- oder Schlecht-Klasse klassifizieren kann, als zusätzliche Trainingsdaten ohne großen Aufwand annotiert werden.

Außerdem erlaubt das hier vorgeschlagene Verfahren und das zugehörige System eine ergänzende Verwendung von ermittelten Oberflächenparameterwerten, die bisher nicht standardisiert wurden, die aber genauso gut für Aussagen über Oberflächenqualitäten herangezogen werden können. Dabei erfolgt die Analyse der Oberfläche des Werkstückes automatisch mittels eines Klassifikationssystems auf Basis der Matrix der Oberflächenparameterwerte, die aus den gemessenen Rohdaten abgeleitet werden.

Darüber hinaus wird eine bessere Vergleichbarkeit über verschiedene Standorte/Maschinen/Sensor-Technologien ermöglicht. Mehraufwand durch eine schwierige Bewertung an Toleranzgrenzen und Bewertungsunsicherheiten an Toleranzgrenzen kann effektiv reduziert werden. Die passende Technologie kann für den Einsatzzweck und die Umgebungsbedingungen gewählt werden. Die Tatsache, dass Form- und Oberflächenmessungen unterschiedliche Fehlereigenschaften aufweisen, hat in der Vergangenheit zu einer falschen Interpretation geführt und damit die automatische Auswertung der Messergebnisse erschwert. Diese Effekte mussten bisher durch aufwändige Filter und Korrekturen kompensiert werden. Auch dieser Zusatzaufwand kann mit dem hier vorgeschlagenen System entfallen.

Als weiterer Vorteile sind zu sehen, dass selbst ungenormte Verfahren (d.h. solche, die nicht einer Vorgabe eines Standardisierungsgremiums unterliegen) können zur Produkutionsüberwachung verwendet werden können. Dabei können empfindliche Messsysteme in Produktionsumgebungen verwendet werden, selbst wenn das Grundrauschen bei der Verwendung von Norm-Parametern oberhalb eines akzeptierten Bereichs liegt. Infolge werden Auswertungen an verschiedenen Standorten vergleichbarer.

Ergänzend sei erwähnt, dass sich intelligente Auswerte-Algorithmen quasi den jeweils vorherrschenden Anforderungen anpassen. Wenn sich z.B. eine Umgebungsbedingung ändert (z.B. neben die Messmaschine wird eine Presse betrieben), kann das Modell neu trainiert werden. Entwickler und Konstrukteure müssen nicht über neue Toleranzen diskutieren.

Die Aufgabe der Konstrukteure bei der Erstellung der Zeichnungen wird dadurch vereinfacht. Diese müssen nicht mehr die Parameter und Toleranzen bestimmen, damit technische Eigenschaften erfüllt werden. Lediglich die Erstellung von Gut- und oder Schlecht-Teilen muss durchgeführt werden.

Im Folgenden werden weitere Ausführungsformen des erfinderischen Konzeptes für das Verfahren, welche gleichermaßen und entsprechend für das System gelten können, vorgestellt:

Gemäß einer Ausführungsform kann das Verfahren zusätzlich ein Speichern des ermittelten zweiten Satzes von Oberflächenparameterwerten des zweiten Setup als zusätzliche Trainingsdaten zum erweiterten Training des Klassifikatorsystems aufweisen, wobei die zweite Gut-Klasse und die zweite Schlecht-Klasse als Annotation für die gespeicherte Messdaten-Matrix verwendet werden kann. Das zweite Setup kann einen manuellen Qualitätsprüfprozess bedeuten, der quasi parallel zur eigentlichen Produktionsanlage bzw. die in ihr integrierte Qualitätsprüfanlage betrieben werden kann. Es können dort (im 2. Setup) zusätzliche oder andere Messsysteme genutzt werden, die neue Rohdaten liefern, die zu zweiten Oberflächenparameterwerten weiterverarbeitet werden, um dann eine genauere oder bessere Entscheidung bzgl. der Qualitätskriterien anzulegen. Zunächst könnte aber auch diese zweite Stufe der Prüfung automatisiert - z.B. mittels eines zweiten Klassifikatorsystem - durchgeführt werden, woraufhin dann nur noch ein kleiner Rest an unentschiedenen (unentschieden-2) Fällen zu qualifizieren wäre: gut oder schlecht.

Gemäß einer weiteren Ausführungsform des Verfahrens kann ein Einordnen der Oberflächenparameter-Matrix in eine dritte Gut-Klasse vorgesehen sein, wenn einer der ermittelten ersten Oberflächenparameterwerten des ersten Satzes unterhalb eines vordefinierten Schwellwertes liegt. In diesem Fall würde die zweite Messung bzw. die Ermittlung der zweiten Oberflächenparameter-Matrix entfallen. In diesem Falle wäre das zugeordnete Werkstück auf jeden Fall ein "Gut-Teil", das die Qualitätskriterien erfüllt.

Gemäß einer sinnvollen Ausführungsform des Verfahrens kann das Klassifikatorsystem aus der Gruppe ausgewählt sein, die besteht aus: Support Vector Machine, Random Forest, Boosting, Gradient Boosting, Gaussian Process, Nearest Neighbor und neuronales Netzwerk. D.h., es können im Wesentlichen alle typischen Klassifikatorsysteme genutzt bzw. angepasst werden.

Gemäß einer besonderen Ausführungsform des Verfahrens kann das neuronale Netzwerk ein Deep Neural Network sein. Diese Art eines neuronalen Netzwerkes eignet sich besonders gut für eine Verarbeitung von optischen Daten oder Daten, die punktweise mittels eines Messkopfes aufgenommen wurden. Das Deep Neural Network kann außerdem in Form eines Convolutional Neural Network implementiert sein.

Gemäß einer weiteren vorteilhaften Ausführungsform des Verfahrens kann das erste und das zweite Oberflächensensorsystem einen taktilen Sensor und/oder einen optischen Sensor aufweisen (oder eine Kombination von beiden). Diese können jeweils 2-dimensionale und/oder 3-dimensionale Daten aufnehmen. Weitere Vorrichtungen und Verfahren zur Oberflächenvermessung sind auch möglich. Damit ergeben sich große Designfreiräume für Entwickler und das vorgeschlagene Verfahren lässt sich in unterschiedlichsten Szenarien einsetzen.

Gemäß einer besonderen Ausführungsform des Verfahrens können die Oberflächenparameterwerte eine Rauheit, eine Welligkeit und/oder eine Form charakterisieren. Diese Werte werden zwar teilweise durch bisher genutzte Standardverfahren geliefert, aber das hier vorgestellte Verfahren kann zusätzlich auch nicht normierte Messverfahren (einem Standard unterliegenden Messverfahren) und insbesondere Oberflächenparameterwerte adressieren. Damit können dann auch neuere Produktionsverfahren und Oberflächenqualitätsbeurteilungsverfahren leicht genutzt werden.

Gemäß einer weiterführenden Ausführungsform des Verfahrens können die Oberflächenparameterwerte Kategorien zugeordnet werden, die aus Rauheitsparametern einer Gruppe ausgewählt sind, die Folgendes aufweist: Parameter der beschreibenden Statistik, Materialanteilskurven, arithmetische Rauheitsparameter, Parameter der Gesamthöhe, optisch ermittelte Flächenparameter, in vorbestimmte Frequenzbändern transformierte Profildaten, Parameter basierend auf Mustererkennung. Auch hier ergibt sich ein breites Spektrum möglicher Beurteilungskriterien, die weit über übliche Standardkriterien hinausgehen.

Gemäß einer optionalen Ausführungsform des Verfahrens kann die Schlecht-Klasse eine Mehrzahl von unterschiedlichen Schlecht-Klassen sein. Damit wäre eine feingranularere Beurteilung der Oberflächenqualität eines Werkstückes, als normalerweise üblich, möglich.

Gemäß einer gut nutzbaren Ausführungsform des Verfahrens können die Umgebungsparameter eines Setup ausgewählt sein, die aus der folgenden Gruppe bestehen können: Standort des Oberflächensensorsystems, Trägersystem für das Oberflächensensorsystem, Temperatur und Luftfeuchtigkeit, Messgeschwindigkeit und Art der Schwingungsisolation. Damit können wichtige Einflussfaktoren der Messungen berücksichtigt werden, welche die Messungen maßgeblich beeinflussen können, sodass schließlich falsche Ergebnisse für die Qualitätsbewertung der Oberflächen vermieden werden könnten.

Gemäß einer weiteren gut nutzbaren Ausführungsform des Verfahrens können die jeweiligen Rohdaten einer Oberfläche oder einer Mehrzahl von Oberflächen zugehörig sein. Damit besitzt das vorgeschlagene Verfahren vielfältige Einsatzmöglichkeiten und ist nicht nur auf primären Oberflächen anwendbar.

### ÜBERSICHT ÜBER DIE FIGUREN

Es sei darauf hingewiesen, dass Ausführungsbeispiele der Erfindung mit Bezug auf unterschiedliche Implementierungskategorien beschrieben sein können. Insbesondere sind einige Ausführungsbeispiele in Bezug auf ein Verfahren beschrieben, während andere Ausführungsbeispiele im Kontext von entsprechenden Vorrichtungen beschrieben sein können. Unabhängig davon ist es einem Fachmann möglich, aus der hier vorstehenden und nachfolgenden Beschreibung - wenn nicht anderweitig darauf hingewiesen - mögliche Kombinationen der Merkmale des Verfahrens sowie mögliche Merkmalskombinationen mit dem entsprechenden System zu erkennen und zu kombinieren, auch wenn sie zu unterschiedlichen Anspruchskategorien gehören.

Bereits oben beschriebene Aspekte sowie zusätzliche Aspekte der vorliegenden Erfindung ergeben sich unter anderem aus den beschriebenen Ausführungsbeispielen und aus den zusätzlichen weiteren, durch Bezug auf die Figuren beschriebenen, konkreten Ausgestaltungen.

Bevorzugte Ausführungsbeispiele der vorliegenden Erfindung werden beispielhaft und mit Bezug auf die folgenden Figuren beschrieben:
Fig. 1 stellt ein Blockdiagramm eines Ausführungsbeispiels des erfinderischen Computer-implementierten Verfahrens zur Oberflächenqualitätsprüfung von Werkstücken dar.
Fig. 2 stellt eine implementierungsnähere Version des vorgeschlagenen Verfahrens mit weiteren Details dar.
Fig. 3 stellt eine Prinzipskizze für Trainings von Klassifikationssystemen im Kontext von unterschiedlichen Setups dar.
Fig. 4 stellt ein Blockdiagramm eines Ausführungsbeispiels des Systems zur Oberflächenqualitätsprüfung von Werkstücken dar.
Fig. 5 stellt ein Blockdiagramm eines Computersystems dar, welches zusätzlich das System gemäß Fig. 4 ganz oder teilweise aufweisen kann.

### DETAILLIERTE FIGURENBESCHREIBUNG

Im Kontext dieser Beschreibung sollen Konventionen, Begriffe und/oder Ausdrücke folgendermaßen verstanden werden:

Der Begriff "Werkstück" beschreibt ein Bauteil in einer Fertigungslinie, welches auf seine Oberflächengüte geprüft werden soll. Der hierfür maschinell unterstützte Prüfungsprozess wird als "Oberflächenqualitätsprüfung" bezeichnet und beschreibt den Einsatz von Oberflächensensoren und eine Auswertung von aufgenommenen Messdaten.

Der Begriff "Rohdaten" beschreibt die Daten, die direkt von den Oberflächensensoren aufgenommen werden ohne interpretiert oder weiterverarbeitet worden zu sein.

Der Begriff "Oberflächenparameterwerte" beschreibt Oberflächengütekriterien, z.B. in Bezug auf eine Rauheit oder eine Welligkeit einer Oberfläche. Derartige Kriterien sind in verschiedenen ISO-Normen beschrieben. Allerdings gibt es auch Oberflächenparameterwerte, die sich zu einer Beschreibung der Qualität einer Oberfläche eigenen, die bisher nicht in Industrienormen beschrieben wurden. Ein Beispiel wäre Daten aus einer Fourier-Transformation der gemessenen Sensordaten. Die Oberflächenparameterwerte lassen sich aus den gemessenen Rohdaten bestimmen und können in Form einer Matrix- insbesondere für das Klassifikatorsystem - genutzt werden.

Ein weiteres Beispiel für ungenormte Oberflächenparameterwerte wären Korrelation-Kenngrößen mit bekannten Fehlerbildern. Auch Machine-Learning-Algorithmen können hier für die Beschreibung der Oberfläche verwendet werden.

Der Begriff "Oberflächenparameterwerte-Matrix" beschreibt eine Gruppe von Zahlen, die in dem mathematischen Konstrukt einer Matrix darstellbar sind und die die Oberflächenparameterwerte in speichertechnisch geeigneter Form enthalten. Darüber hinaus können zusätzliche Parameterwerte in der Oberflächenparameterwerte-Matrix enthalten bzw. gespeichert sein, wie z.B. Angaben zum jeweiligen Setup.

Der Begriff "Oberflächensensorsystem" kann beispielsweise Tastköpfe mit Tastkugeln beschreiben, die an ein Koordinatenmesssystem oder an einen Roboterarm montiert sind. Zusätzlich können optische Systeme als Oberflächensensorsysteme eingesetzt sein. Diese müssten auch nicht über die Oberfläche bewegt werden, sondern könnten eine Aufnahme eines digitalen Bildes aus einer stationären Position heraus vornehmen. Das würde die Anzahl beweglicher Teile vorteilhaft reduzieren und eine Auswertung könnte schneller vorgenommen werden. Darüber hinaus könnten weitere Oberflächenparameterwerte bestimmt werden, die über die Grenzen der ISO-Kriterien hinausgehen. Weiterhin könnte ein Tastkopfsystem in Kombination mit einem optischen System eingesetzt werden. Als typisch kann auch ein Tastschnittgerät angesehen werden, das von einem Messkopf eines Koordinatenmessgerätes getragen wird.

Der Begriff "Setup" beschreibt Umgebungsvariablen der Messung der Oberflächenqualität, wie beispielsweise die vorherrschende Temperatur, die vorherrschende Luftfeuchtigkeit, Datum/Tageszeit, genutzte Oberflächensensoren, Standort, etc. Insgesamt handelt es sich um Metadaten für die Oberflächenqualitätsprüfung, d.h. Daten über die Rohdaten, bzw. unter welchen Umständen diese und auch die daraus abgeleiteten Oberflächenparameterwerte entstanden sind. Dabei wird z.B. zwischen Setups unterschieden, die zwar an einem gleichen Fertigungsstandort anzutreffen sind, die sich aber beispielsweise dadurch unterscheiden, dass es sich bei dem einen Setup um den Inline-Prüfprozess handelt, während es sich bei einem zweiten Setup eine - potenzielle genauere - Nachmessung in z.B. einem Prüfraum handelt.

Der Begriff "Klassifikatorsystem" - im Kontext des maschinellen Lernens (machine learning) auch als Classifier oder Klassifikationssystem bezeichnet - beschreibt ein Machine-Learning basierendes System, welches durch ein Training mit Trainingsdaten in die Lage versetzt wird, Eingangsdaten - hier insbesondere Bilddaten von aufgenommenen Proben (bzw. auch mindestens eines Teils des Probentisches) Merkmale der Probe und/oder auch eines Zusammenwirkens der Probe mit dem Probentisch einer bestimmten Klasse (insbesondere einer vorherbestimmten Qualitätsklasse) zuzuordnen.

Dabei ist auch anzumerken, dass ein Klassifikator Eingangsdaten typischerweise in eine vorgegebene Anzahl von Klassen klassifiziert. Dies geschieht normalerweise dadurch, dass ein Klassifikationswert der Eingabedaten für jede Klasse bestimmt wird und ein WTA-Filter (winner takes it all) die Klasse mit dem höchsten Klassifikationswert als die klassifizierte Klasse auswählt. Bei Klassifikatoren wird die Abweichung zu einem 100%-Klassifikationswert häufig als Qualitätsparameter der Klassifikation bzw. als Wahrscheinlichkeit für die Richtigkeit der Klassifikation genutzt (Confidence). Bei unklaren Klassifikationsergebnissen kann das Auswahlsystem eine Fehlermeldung erzeugen, wenn beispielsweise der Unterschied zwischen der wahrscheinlichsten Klasse und der nächstwahrscheinlichen Klasse unterhalb eines vordefinierten Schwellwertes liegt (z.B. 30%).

Der Begriff "Klassifizieren" beschreibt hier zunächst den Prozess des Zuordnens einer Oberflächenparameterwerte-Matrix zu unterschiedlichen Klassen, in die sie eingeteilt werden; z.B. eine Einteilung in eine Gut-Klasse, eine Schlecht-Klasse und ggfs. eine Unentschieden-Klasse je nachdem für welche dieser Klassen der zugehörige Confidence-Level (Konfidenzwert, Vertrauensniveau) am höchsten ist. Darüber hinaus kann auch festgelegt sein, dass ein Mindestabstand (z.B. Differenzwert) zwischen dem Klassifikationsergebnis - d.h. einem Convidence-Level-Wert - und dem nächstniedrigeren Klassifikationsergebnis - d.h. anderen Convidence-Level-Wert - gegeben sein muss (z.B. 50% oder 60%), damit eine eindeutige Klassifikation möglich ist.

Der Konfidenzwert kann - wie in einer weiter unten beschriebenen alternativen Ausführungsform - auch genutzt werden, um statt in drei Klassen zu klassifizieren ("gut", "schlecht", "unentschieden"), nur zwei Klassen vorzugeben, in die klassifiziert werden soll. Der Konfidenzwert kann das genutzt werden, um Unsicherheiten bei den Klassifikationen zu adressieren, z.B. durch eine zweite Messung und Beurteilung. Wenn also der Konfidenzwert für eine Klassifikation in die Gut-Klasse z.B. 80% oder höher ist, könnte das Werkstück gleich als den Qualitätskriterien entsprechend eingestuft werden. Bei 20% für die Gut-Klasse, was 80% für die Schlecht-Klasse bedeutet, kann das Werkstück umgehend als den Qualitätskriterien nicht entsprechend eingestuft werden. Natürlich sind andere Prozentwerte jederzeit nutzbar. Der Bereich dazwischen kann das als fraglich angesehen werden (äquivalent einer Unentschieden-Klasse) und eine Nachuntersuchung mittels eines zweiten Setup kann veranlasst werden.

Der Begriff "Machine-Learning" (bzw. maschinelles Lernen) ist ein Grundbegriff bzw. eine Grundfunktion der künstlichen Intelligenz, wobei z.B. statistische Verfahren verwendet werden, um Computersystemen die Fähigkeit des "Lernens" zu geben. Beispielsweise werden dabei bestimmte Verhaltensmuster innerhalb eines spezifischen Aufgabenbereiches optimiert. Die verwendeten Verfahren versetzen trainierte Systeme des maschinellen Lernens in die Lage, Daten zu analysieren, ohne, dass es dazu einer expliziten prozeduralen Programmierung bedarf. Typischerweise handelt es sich z.B. bei einem NN (neuronales Netzwerk) oder CNN (Convolutional Neural Network) um ein Beispiel für ein System für maschinelles Lernen, um ein Netzwerk von Knoten zu bilden, welche als künstliche Neuronen agieren, und um künstliche Verbindungen zwischen den künstlichen Neuronen - sogenannte Links - wobei den künstlichen Verbindungen Parameter - zum Beispiel Gewichtsparameter für die Verbindung - zugeordnet werden können. Während des Trainings des neuronalen Netzes passen sich die Gewichtsparameterwerte der Verbindungen automatisch auf Basis von Eingangssignalen zur Erzeugung eines gewünschten Ergebnisses an. Beim überwachten Lernen werden die als Eingabewerte (Trainingsdaten) gelieferten bzw. gemessenen Rohdaten - allgemein (Eingangs-)Daten - durch gewünschte Ausgabedaten (Annotationen) ergänzt, um einen gewünschten Ausgabewert (gewünschte Klasse) zu erzeugen. Ganz allgemein betrachtet wird eine Abbildung von Eingangsdaten auf Ausgangsdaten gelernt. Typische bekannte Klassifikatorsysteme nutzen die Eigenschaften der folgenden Prinzipien: "Support Vector Machine", "Random Forest, Boosting (allgemein) Gradient Boost (im Speziellen), Gaussian Regression, Nearest Neigbor, neuronales Netzwerk, Deep Neural Network, Convolutional Neural Network.

Der Begriff "Trainieren des Klassifikatorsystems" bedeutet hier, dass z.B. ein Machine-Learning-System (maschinelles Lernsystem) durch eine Mehrzahl von Sätzen von Beispieldaten - z.B. Oberflächenparameterwerte-Matrizen - in einem beispielsweise neuronalen Netz durch teilweise wiederholtes Auswerten der Beispieldaten so justiert wird, um nach der Trainingsphase auch unbekannte Oberflächenparameterwerte-Matrizen einer oder mehrerer Klassen zuzuordnen, mit denen das Lernsystem trainiert worden ist. Die Beispieldaten sind typischerweise annotiert - d.h. mit Metadaten versehen - um basierend auf den Oberflächenparameterwerte-Matrizen gewünschte Ergebnisse zu erzeugen; z.B. Gut-Klasse, Schlecht-Klasse, Unentschieden-Klasse.

Die Trainingsdaten - und somit Werkstücke - müssten entsprechend dem gewählten Modell und der Anzahl der Klassen zur Verfügung stehen.

Der Begriff "Convolutional Neural Network" - als ein häufig genutztes Beispiel für einen Klassifikator - beschreibt eine Klasse von künstlichen neuronalen Netzwerken, die auf Feed-Forward-Techniken basieren. Sie werden häufig für Bildanalysen mit Bildern bzw. deren Pixeln als Eingangsdaten eingesetzt. Sie eignen sich auch gut, wenn "Quasi-Pixel" aus Oberflächendaten oder andere Matrizenwerte - hier die Oberflächenparameterwerte-Matrix - verarbeitet werden sollen. Hauptbestandteile von Convolutional Neural Networks sind dabei Faltungsschichten (daher der Name), welche eine effiziente Auswertung durch Parameter-Sharing ermöglicht. Typischerweise wird jeder Pixel des aufgenommenen Bildes einem künstlichen Neuron des neuronalen Netzwerkes als Eingangswert zugewiesen.

Es sei auch erwähnt, dass Deep Neural Networks aus mehreren Schichten unterschiedlicher Funktionen - beispielsweise einer Eingangsschicht, einer Ausgangsschicht und einer oder mehrerer dazwischen liegenden Schichten, beispielsweise für Faltungsoperationen, Anwendung von nichtlinearen Funktionen, einer Dimensionsreduktion, Normalisierungsfunktionen, etc. - bestehen. Die Funktionen können "in Software ausgeführt" werden oder es können spezielle Hardware-Baugruppen die Berechnung der jeweiligen Funktionswerte übernehmen. Darüber hinaus sind Kombinationen von Hardware- und Softwareelementen bekannt.

Der Begriff "Qualitätsklassen" beschreibt die Klassen - im Sinne des Klassifikatorsystems - in das das Klassifikatorsystem die ermittelte Oberflächenparameterwerte-Matrix klassifiziert. Dabei wird zwischen "Gut-Klassen" und "Schlecht-Klassen" unterschieden. Eine Zuordnung in eine Gut-Klasse bestätigt, dass die vorgenommene Oberflächenqualitätsprüfung einer vorgegebenen Qualität genügt, während dies bei einer Schlecht-Klasse nicht der Fall ist. Es kann deshalb zwischen mehreren Gut- bzw. Schlecht-Klassen unterschieden werden, weil die zugehörige Oberflächenqualitätsprüfung mit jeweils unterschiedlichen Setups durchgeführt worden sein kann. Kann das Klassifikatorsystem keine eindeutige Klassifikation vornehmen, weil z.B. der Confidence-Level (vorbestimmt) nicht ausreicht, kann das Klassifikatorsystem auch in eine Unentschieden-Klasse klassifizieren.

Im Folgenden wird eine detaillierte Beschreibung der Figuren angegeben. Dabei versteht es sich, dass alle Details und Anweisungen in den Figuren schematisch dargestellt sind. Zunächst wird ein Blockdiagramm eines Ausführungsbeispiels des erfindungsgemäßen Computer-implementierten Verfahrens zur Oberflächenqualitätsprüfung von Werkstücken dargestellt. Nachfolgend werden weitere Ausführungsbeispiele bzw. Ausführungsbeispiele für das entsprechende System beschrieben:

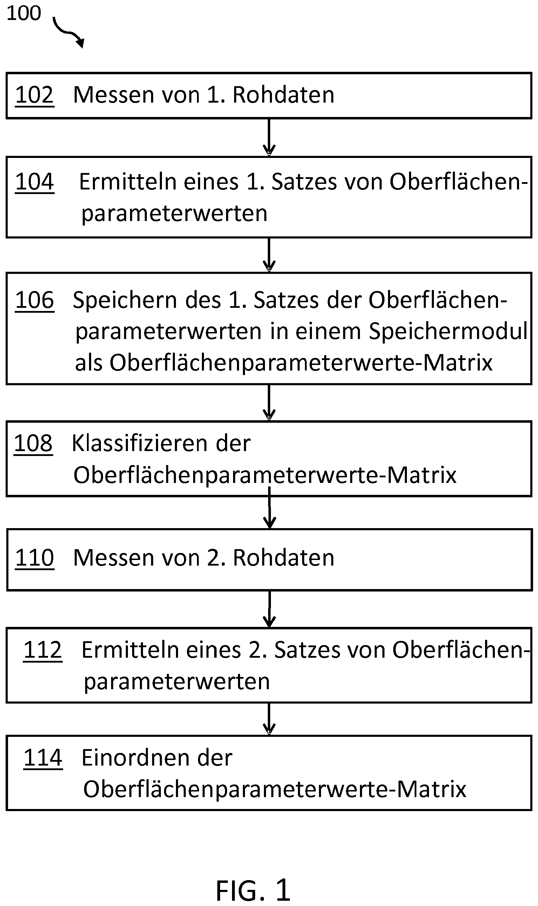

**Fig. 1** stellt ein Blockdiagramm eines Ausführungsbeispiels des erfinderischen Computer-implementierten Verfahrens 100 zur Oberflächenqualitätsprüfung - insbesondere Form und Fläche von Werkstücken - dar. Das Verfahren 100 weist ein Ermitteln, 104, eines ersten Satzes von Oberflächenparameterwerten auf. Typischerweise können drei Messungen (oder mehr) vorgenommen werden. Der erste Satz von Oberflächenparameterwerten basiert auf ersten gemessenen (102) Rohdaten eines Oberflächensensorsystem. Die Rohdaten können von einem Messkopf, der beispielsweise taktil oder optisch arbeitet, geliefert werden. Der Messkopf kann dabei z.B. an einem Koordinatenmessgerät oder Roboterarm befestigt sein, um Messungen am Werkstück vorzunehmen und so die Rohdaten zu liefern aus denen dann die Oberflächenparameterwerte abgeleitet werden. Dies wird typischerweise jeweils für ein bestimmtes Setup vorgenommen.

Ein Setup beschreibt dabei eine ganze Reihe von Umgebungsparameterwerten unter deren Einfluss die Messung vorgenommen wurde; dazu gehören beispielsweise der Standort, an dem die Messung durchgeführt wird, der Sensortyp und das zugehörige Trägersystem (Roboterarm oder Messmaschine), Temperatur und Luftfeuchtigkeit währen der Messung, usw. Zusätzlich können charakteristische Oberflächenparameterwerte des Werkstückes in die Angaben des Setup einfließen; beispielsweise ob es sich um eine gefräste Oberfläche, eine gebohrte Oberfläche, etc. handelt. Letztlich sollten mindestens die wesentlichen Einflussgrößen in den Setup-Daten erfasst sein, die wichtige Einflussgrößen auf die Oberflächendatengewinnung mittels des Oberflächensensorsystems repräsentiert.

Das Verfahren 100 weist weiterhin ein Speichern, 106, des ersten Satzes der Oberflächenparameterwerte in einem Speichermodul in Form einer Oberflächenparameterwerte-Matrix auf, wobei in der Oberflächenparameterwerte-Matrix das erste Setup zugeordnet ist. Dies kann mittels eines Identifikators (d.h., Index, ID-Wert, etc.) für die Daten des ersten Setup gelöst sein.

Zusätzlich weist das Verfahren 100 ein Klassifizieren, 108, der Oberflächenparameterwerte-Matrix - also der Werte, die die Oberfläche des Werkstückes charakterisieren, mittels eines trainierten Klassifikatorsystems des zugehörigen Setup in Qualitätsklassen auf. Dabei wird bei den Qualitätsklassen zwischen einer ersten Gut-Klasse, einer ersten Unentschieden-Klasse und einer ersten Schlecht-Klasse (optional -jeweils mit einem Confidence-Level für die Klassifikation (z.B. > 60% Confidence für eine Zuordnung zu einer der Klassen) - unterschieden.

Die Qualitätsklassen sind vorzugweise nicht überlappend, und das Klassifikatorsystem wurde mittels annotierten Trainingsdaten trainiert, um ein Klassifikationsmodell zu bilden, um eine Oberflächenparameterwerte-Matrix einer von einer Mehrzahl von vordefinierten Klassen zuzuordnen.

Für die Unentschieden-Klasse des ersten Setup weist das Verfahren 100 darüber hinaus ein zusätzliches Ermitteln, 112, eines zweiten Satzes von Oberflächenparameterwerten für ein zweites Setup basierend auf zweiten gemessenen (110) Rohdaten eines zweiten Oberflächensensorsystems auf. Die ersten und zweiten Rohdaten können teilweise überlappen bzw. teilweise identisch sein. Dabei würden nur die Rohdaten, die zu geänderten Oberflächenparameterwerten führen würden, neu gemessen werden. Es sei auch angemerkt, dass das erste Oberflächensensorsystem und das zweite Oberflächensensorsystem gleichen Typs auch tatsächlich dasselbe sein kann. Es könnten im Falle der Gleichheit aber mehr Rohdaten oder Rohmessdaten an anderen und/oder weiteren Stellen des Werkstückes aufgenommen werden.

Schließlich weist das Verfahren 100 ein Einordnen, 114, der Oberflächenparameter-Matrix, die das Werkstück repräsentiert, in eine zweite Gut-Klasse oder eine zweite Schlecht-Klasse basierend auf dem ermittelten zweiten Satz von Oberflächenparameterwerten auf. Hier kommt es also zu einer endgültigen Entscheidung, ob es sich um ein gutes Werkstück entsprechend vorgegebener Qualitätsmaßstäbe handelt oder nicht. Die Entscheidung kann entweder manuell - d.h. mittels eines Bedieners oder auch mittels eines Klassifikatorsystems erfolgen. Auch ist es möglich, mehrstufig vorzugehen - zunächst mittels eines Klassifikatorsystems mit drei Klassen ("gut", "schlecht", "unentschieden") und dann nochmals manuell mit einer endgültigen Entscheidung über eine Einhaltung von Qualitätskriterien.

Gemäß einem alternativen Ausführungsbeispiel, das grundsätzlich auf der gleichen Kernidee beruht sich aber im Detail ein wenig unterscheidet, wird mit einer Gut-Klasse und einer Schlechtklasse gearbeitet und auf die Unentschieden-Klasse verzichtet. Stattdessen wird dafür auf den Konfidenzwert der Klassifikation in the Gut-Klasse (alternativ Schlecht-Klasse) zurückgegriffen, die grundsätzlich auch als Basis für die Eingruppierung in die Unentschieden-Klasse herangezogen werden könnte. Dabei wird das zusätzliche Ermitteln, 112, eines zweiten Satzes von Oberflächenparameterwerten für ein zweites Setup dann durchgeführt, wenn der Konfidenzwert der Klassifikation in the Gut-Klasse nicht klar bzw. eindeutig genug gewesen ist. Entsprechendes gilt für das Vorgehen bei einem Konfidenzwert der Klassifikation in die Schlecht-Klasse.

Folglich stellt sich der Ablauf des alternativen Ausführungsbeispiels wir folgt dar: Das computer-implementiertes Verfahren zur Oberflächenqualitätsprüfung von Werkstücken weist auch hier ein Ermitteln 104 eines ersten Satzes von Oberflächenparameterwerten basierend auf ersten gemessenen Rohdaten (vgl. Bezugszeichen 102) eines Oberflächensensorsystems, wobei eine Oberflächendatengewinnung für die ersten gemessenen Rohdaten hierbei einem ersten Setup, welches Einflussgrößen auf die Oberflächendatengewinnung mittels des Oberflächensensorsystems repräsentiert, unterliegt.

Gleichermaßen weist das Verfahren ein Speichern, 106, des ersten Satzes der Oberflächenparameterwerte in einem Speichermodul in Form einer Oberflächenparameterwerte-Matrix, wobei der Oberflächenparameterwerte-Matrix das erste Setup zugeordnet ist.

Das Klassifizieren der Oberflächenparameterwerte-Matrix mittels eines trainierten Klassifikatorsystems des zugehörigen Setup in Qualitätsklassen unterscheidet sich allerdings etwas von der oben genannten ersten Alternative. Die Qualitätsklassen weisen eine erste Gut-Klasse und eine erste Schlecht-Klasse auf - also keine explizite Unentschieden-Klasse - wobei die Qualitätsklassen nicht überlappend sind, und wobei das Klassifikatorsystems mittels annotierten Trainingsdaten trainiert wurde, um ein Klassifikationsmodell zu bilden, um eine Oberflächenparameterwerte-Matrix einer von einer Mehrzahl - hier also nur zwei Klassen - von vordefinierten Klassen zuzuordnen.

Das Ermitteln eines zweiten Satzes von Oberflächenparameterwerten für ein zweites Setup wird nun basierend auf zweiten gemessenen Rohdaten eines zweiten Oberflächensensorsystems für eine Oberflächenparameterwerte-Matrix des ersten Setup, deren Konfidenzwert dafür für die Gut-Klasse in einem vordefinierten Werte-Korridor liegt. Ein derartiger Wertekorridor kann beispielsweise durch die Grenzen 30% bis 70% Konfidenz festgelegt. Da es nur eine Gut-Klasse und eine Schlecht-Klasse gibt, sollten sich die Konfidenzwerte bei jeder Klassifikation zu 100% ergänzen. Folglich würden Werkstücke, die bei der Messung und der Klassifikation beim ersten Setup mit einem Konfidenzwert von z.B. 70% für die Gut-Klasse abschneiden, als Gutteil eingestuft, für das eine zweite Messung in einem zweiten Setup nicht erforderlich ist. Entsprechendes würde für einen Konfidenzwert von 30% für die Gut-Klasse oder darunter gelten (entsprechend 70% oder mehr für die Schlecht-Klasse) gelten: keine Messung und Beurteilung in einem zweiten Setup, da das entsprechende Werkstück als Ausschuss klassifiziert wäre.

Das bedeutet auch, dass das Einordnen der Oberflächenparameter-Matrix in eine zweite Gut-Klasse oder eine zweite Schlecht-Klasse basierend auf dem ermittelten zweiten Satz von Oberflächenparameterwerten nur dann stattfindet, wenn der Konfidenzwert für die erste Klassifikation in dem vorgegebenen (unentschieden) Wertekorridor gelegen hätte. Die o.g. Werte für den Korridor sind nur beispielhaft zu verstehen. Selbstverständlich kann der Wertekorridor auch im Bereich 20% bis 80%, 10% bis 90% oder asymmetrisch im Bereich 20% bis 92% liegen. Auch andere Werte sind selbstverständlich - je nah örtlichen Gegebenheiten - möglich.

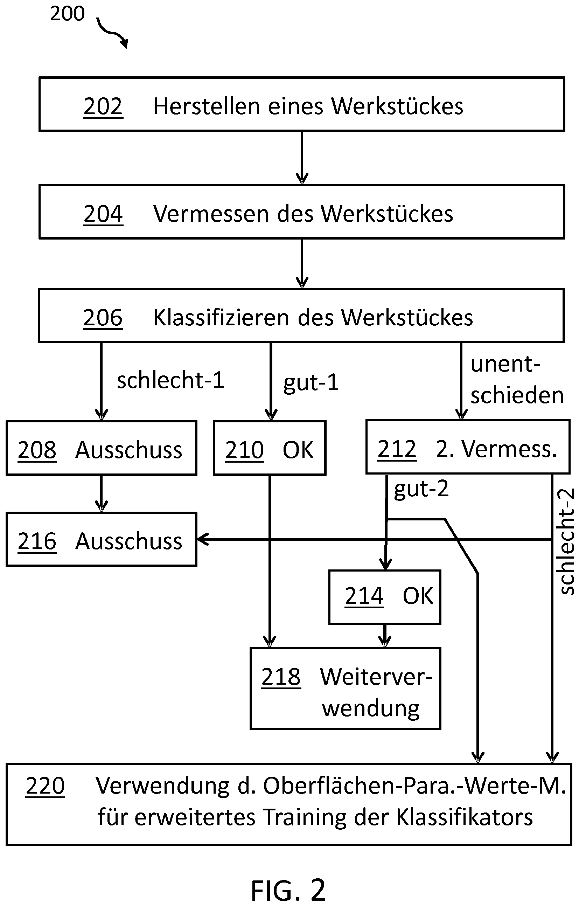

**Fig. 2** stellt eine Prinzipskizze 200 einer implementierungsnäheren Version des vorgeschlagenen Verfahrens mit weiteren Details dar. Zunächst wird ein Werkstück hergestellt, 202. Daraufhin erfolgt das Vermessen, 204, des Werkstückes, insbesondere das Vermessen der Oberfläche des Werkstückes mittels der genannten Oberflächensensoren. Aus den gemessenen Rohdaten werden Oberflächenparameterwerte bestimmt, die gegebenenfalls um Setup-Parameterwerte ergänzt werden. Die so gewonnenen Parameterwerte werden in Matrixform dem Eingang eines Klassifikatorsystems zugeführt, so dass das Werkstück klassifiziert, 206, werden kann. Diejenigen Werkstücke, die als schlecht ("schlecht-1") klassifiziert werden, werden als Ausschuss eingeordnet, 208. Diejenigen Werkstücke, die als gut ("gut-1"), 210, eingeordnet (klassifiziert) werden, haben der Qualitätsüberprüfung standgehalten. Daneben kann es aber auch noch eine Klasse geben, bei der der "Confidence-Level"/der Konfidenzwert - d.h., die Sicherheit, mit der das Klassifikatorsystem seine Klassifikation vorgenommen hat - nicht ausreichend hoch ist, um zu entscheiden, dass die Oberflächenqualität des Werkstückes ausreichend ist (sondern "unentschieden"). In diesem Fall kann eine zweite Vermessung 212 des Werkstückes mit einem zweiten Setup, beispielsweise in einem besonderen Messraum mit einer besonderen Messvorrichtung - z.B. in einer Umgebung mit weniger Umgebungsschwingungen - vorgenommen werden. Auch hier kann wieder ein Klassifikatorsystem genutzt werden, um die Oberflächenqualität - über das Mittel der Oberflächenparameterwerte-Matrix - zu ermitteln.

In dieser zweiten Stufe der Oberflächenqualitätsprüfung sollte aber endgültig entschieden werden, ob es sich um ein Ausschussstück 216 handelt oder um ein Werkstück, welches den Qualitätskriterien genügt, 214. Ein derartiges Werkstück verbleibt in der laufenden Fertigung zur Weiterverwendung, 218.

Durch die überschaubare Anzahl von Werkstücken, die dieser zweiten Prüfung unterzogen werden, die in aller Regel auch durch einen aktiven Benutzer unterstützt wird, können die Ergebnisse dieser zweiten Oberflächenqualitätsvermessung leicht annotiert werden, so dass sie als zusätzliche Trainingsdaten für das Klassifikatorsystem der ersten Prüfstufe - d.h., des Qualitätsprüfungsprozesses in der laufenden Fertigung - genutzt werden können, 220. Das zusätzliche Training kann durch nichtunterstütztes Lernen (unsupervised learning) oder durch unterstütztes Lernen (supervised learning) erfolgen.

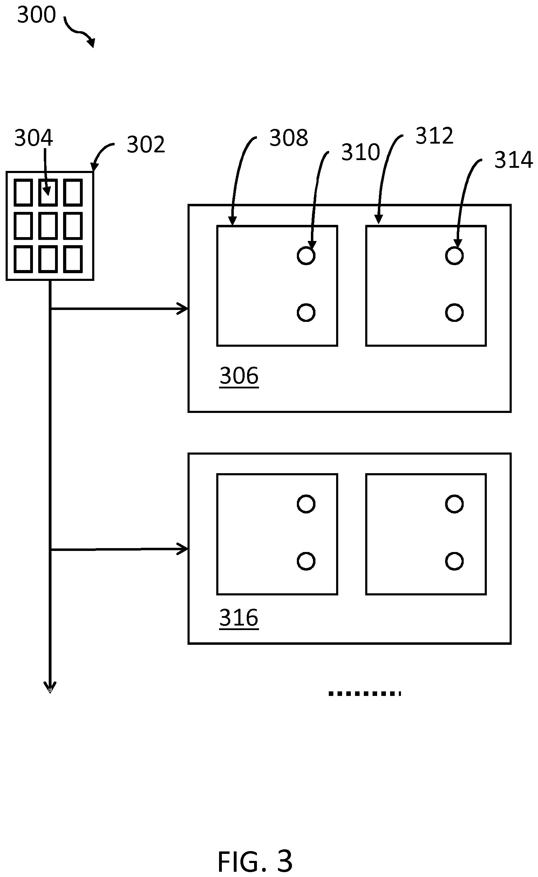

**Fig. 3** stellt eine Prinzipskizze 300 für Trainings von Klassifikationssystemen im Kontext von unterschiedlichen Setups - beispielsweise unterschiedliche Standorte oder unterschiedliche Produktionslinien am gleichen Standort - dar. Die unterschiedlichen Standorte bzw. unterschiedlichen Produktionslinien können dadurch gekennzeichnet sein, dass unterschiedliche akzeptable Störgrößen wie Schwingungen, Oberflächenporen oder optische Artefakte akzeptierbar sind. Diese können auch mittels Pattern Matching ermittelt werden, ein Verfahren, bei dem die Anzahl der Patterns nicht vorgegeben sein muss.

Dadurch, dass die Oberflächenqualitätsprüfung in den unterschiedlichen Umgebungen (z.B. Standorte, Produktionslinien) jeweils unterschiedliche Setups bedeuten, muss das jeweils vorhandene Klassifikatorsystem an die jeweils vorhandenen Setups angepasst werden. Dazu reicht es nicht aus, dass die Trainingsdaten eines Standortes den Qualitätsmesssystemen und damit den Klassifikatorsystemen an den anderen Standorten/Produktionslinien übermittelt werden. Vielmehr ist es erforderlich, dass die Werkstücke, die zum Training der Mehrzahl der Klassifikatorsysteme an den unterschiedlichen Standorten/den unterschiedlichen Setups genutzt werden, die gleichen sind. Konsequenterweise sollte also eine Mehrzahl von als gut erachteten Werkstücken und eine Mehrzahl von als schlecht (Ausschuss) erachteten Werkstücken nach und nach allen Setups verfügbar gemacht werden, um jeweils vor Ort das Training des Klassifikatorsystems vorzunehmen. Bildlich gesprochen sollte also eine Palette mit den gleichen Gut-Teilen und gleichen Schlecht-Teilen allen Setups zu Trainingszwecken zur Verfügung gestellt werden, um die unterschiedlichen Umweltparameter der unterschiedlichen Setups komplett zu berücksichtigen.

Fig. 3 skizziert dieses Vorgehen: eine Palette 302 mit den genannten Gut- /Schlecht-Teilen 304 an einen ersten Qualitätsprüfungsort 306 gebracht, an dem mindestens eine von potenziell mehreren Oberflächenmesssystemen 308, 312 (System zur Oberflächenqualitätsprüfung von Werkstücken z.B. mehrere Produktionslinien, unterschiedliche Messgeräte, zusätzlicher Detailmessraum, ...) vorhanden ist. Die Werkstücke für das Training sind im übertragenen Sinne annotiert, so dass während der Trainingsphase jeweils bekanntes ist, ob es sich um ein Gut-Teil oder ein schlecht-3 handelt. Die Umgebungsparameterwerte des Systems zur Oberflächenqualitätsprüfung von Werkstücken werden durch den Datensatz des jeweiligen Setup berücksichtigt. Die Oberflächenmesssysteme 308, 312 können jeweils einen oder mehrere Messköpfe 310, 314 (jeweils nur ein Messkopf mit einer Referenznummer versehen) ausgerüstet sein. Dies gilt sowohl für den ersten Standort/erstes Setup 306 wie auch für weitere Standorte/Setups 316.

Darüber hinaus ist es auch möglich, das vorgeschlagene Verfahren dadurch zu erweitern, dass eine Vernetzung der Sensoren, der Messmaschinen und der Standorte vorgenommen wird. Das eingesetzte Machine-Learning-Modell bzw. die zu Grunde liegenden neuronalen Netzwerke kategorisieren dabei basierend auf den genannten Parametern und Einflussfaktoren, so dass gleiche oder ähnliche Setups an dem jeweiligen Modellaufbau eines anderen Setup partizipieren können, welche ähnliche Umgebungsparameter aufweisen. Große Messreihen an einem Produktionsstandort können damit die Entscheidungskompetenz des jeweiligen Klassifikatorsystem an einem anderen Standort verbessern helfen.

Der Vollständigkeit halber sei erwähnt, dass das Training der Klassifikatorsysteme auch ausschließlich mit Gut- oder Schlecht-Teilen durchgeführt werden könnte. Das jeweilige Machine-Learning-Modell kann auch mit a priori Wissen erstellt werden und nur mittels des unüberwachten Lernens (unsupervised learning), d.h., ohne ein vorheriges Training optimiert werden.

Zusätzlich können durch eine manuelle Überwachung Entscheidungen des Modells - d.h. des Klassifikatorsystems - korrigiert werden, was wiederum dem Klassifikatorsystem (d.h. dem Modell) zugeführt wird, um dieses zu optimieren. Dies kann insbesondere in der Anfangsphase der Produktionsüberwachung - d.h. der Oberflächenqualitätsüberwachung - sinnvoll sein.

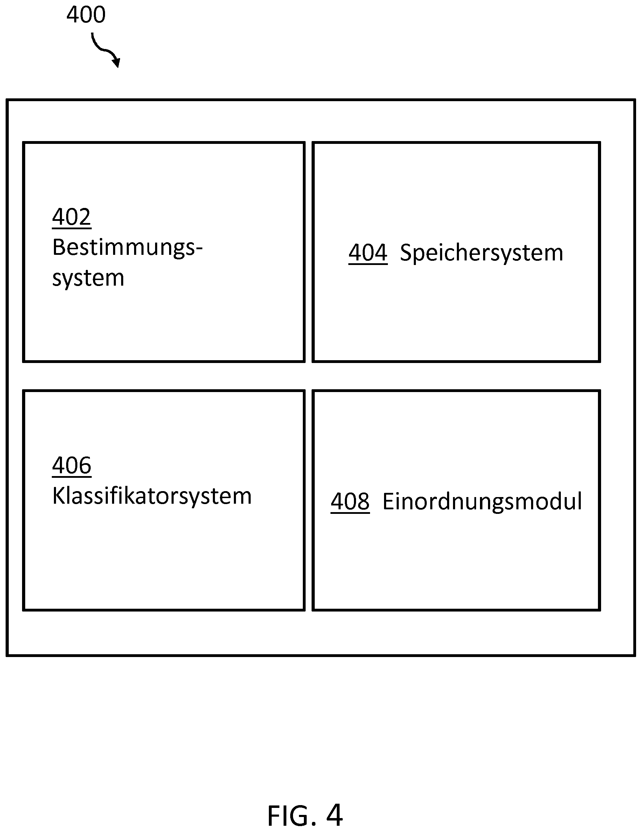

Der Vollständigkeit halber stellt **Fig. 4** ein Blockdiagramm eines Ausführungsbeispiels des Systems 400 zur Oberflächenqualitätsprüfung von Werkstücken dar. Das System 400 weist ein Bestimmungssystem 402 auf, das angepasst ist zum Ermitteln eines ersten Satzes von Oberflächenparameterwerten basierend auf ersten gemessenen Rohdaten eines Oberflächensensorsystems, wobei eine Oberflächendatengewinnung für die ersten gemessenen Rohdaten hierbei einem ersten Setup, welches Einflussgrößen auf die Oberflächendatengewinnung mittels des Oberflächensensorsystems repräsentiert, unterliegt.

Weiterhin weist das System 400 ein Speichersystem 404 auf, das angepasst ist zum Speichern des ersten Satzes der Oberflächenparameterwerte in einem Speichermodul in Form einer Oberflächenparameterwerte-Matrix. Dabei wird die Oberflächenparameterwerte-Matrix dem ersten Setup zugeordnet.

Das System weist weiterhin ein trainiertes Klassifikatorsystem 406 auf, das angepasst ist zum Klassifizieren der Oberflächenparameterwerte-Matrix in Qualitätsklassen, wobei das trainierte Klassifikatorsystem einem Setup zugeordnet ist, und wobei die Qualitätsklassen eine erste Gut-Klasse, eine erste Unentschieden-Klasse und eine erste Schlecht-Klasse aufweisen. Die Qualitätsklassen sind typischerweise nicht überlappend, und das trainierte Klassifikatorsystem 406 wurde mittels annotierten Trainingsdaten trainiert, um ein Klassifikationsmodell zu bilden, um eine Oberflächenparameterwerte-Matrix - und damit ein Werkstück - einer von einer Mehrzahl von vordefinierten Klassen zuzuordnen.

Das Bestimmungssystem 402 ist auch angepasst zum Ermitteln eines zweiten Satzes von Oberflächenparameterwerten für ein zweites Setup basierend auf zweiten gemessenen Rohdaten eines zweiten Oberflächensensorsystems für die Unentschieden-Klasse des ersten Setup.

Zusätzlich weist das System ein Einordnungsmodul 408 auf, das angepasst ist zum Einordnen der Oberflächenparameter-Matrix in eine zweite Gut-Klasse oder eine zweite Schlecht-Klasse basierend auf dem ermittelten zweiten Satz von Oberflächenparameterwerten.

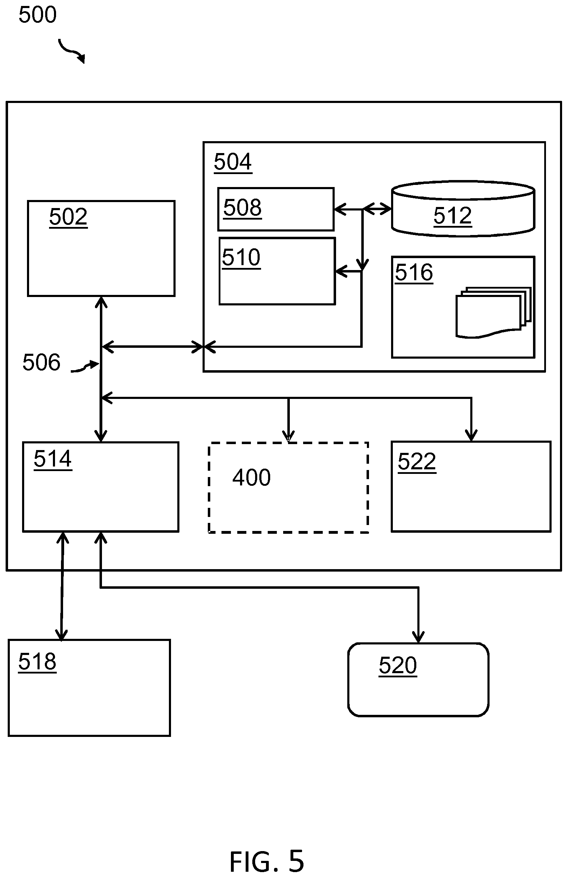

**Fig. 5** stellt ein Blockdiagramm eines Computersystems dar, welches mindestens Teile des Systems zur Oberflächenqualitätsprüfung von Werkstücken aufweist. Ausführungsformen des hier vorgeschlagenen Konzepts können grundsätzlich mit praktisch jedem Typ von Computer, unabhängig von der darin verwendeten Plattform zur Speicherung und/oder Ausführung von Programmcodes, genutzt werden. Fig. 5 stellt insofern beispielhaft ein Computersystem 500 dar, welches zur Ausführung von Programmcode entsprechend des hier vorgestellten Verfahrens geeignet ist.

Das Computersystem 500 weist eine Mehrzahl von allgemein nutzbaren Funktionen (general purpose functions) auf. Dabei kann das Computersystem ein Tablet-Computer, ein Laptop-/Notebook-Computer, ein anderes tragbares oder mobiles elektronisches Gerät, ein Mikroprozessorsystem, ein Mikroprozessor-basiertes System, ein Smartphone oder Computersystem mit speziell eingerichteten Sonderfunktionen sein. Das Computersystem 500 kann eingerichtet sein zur Ausführung vom Computer-System ausführbaren Anweisungen - wie beispielsweise Programmmodulen - die ausgeführt werden können, um Funktionen der hier vorgeschlagenen Konzepte umzusetzen. Dazu können die Programmmodule Routinen, Programme, Objekte, Komponenten, Logik, Datenstrukturen usw. aufweisen, um bestimmte Aufgaben oder bestimmte abstrakte Datentypen zu implementieren.

Die Komponenten des Computersystems können Folgendes aufweisen: einen oder mehrere Prozessoren oder Verarbeitungseinheiten 502, ein Speichersystem 504 und ein Bussystem 506, welches verschiedene Systemkomponenten inklusive des Speichersystems 504 mit dem Prozessor 502 verbindet. Typischerweise weist das Computersystem 500 eine Mehrzahl von durch das Computersystem 500 zugreifbaren flüchtigen oder nicht-flüchtigen Speichermedien auf. Im Speichersystem 504 können die Daten und/oder Instruktionen (Befehle) der Speichermedien in flüchtiger Form - wie beispielsweise in einem RAM (random access memory) 508 - gespeichert sein, um von dem Prozessor 502 ausgeführt zu werden. Diese Daten und Instruktionen realisieren einzelne oder mehrere Funktionen bzw. Schritte des hier vorgestellten Konzeptes. Weitere Komponenten des Speichersystems 504 können ein Permanentspeicher (ROM) 510 und ein Langzeitspeicher 512 sein, in dem die Programmmodule und Daten (Bezugszeichen 516) wie auch Workflows gespeichert sein können.

Das Computersystem weist zur Kommunikation eine Reihe von dedizierten Vorrichtungen (Tastatur 518, Maus/Pointing Device (nicht dargestellt), Bildschirm 520, usw.) auf. Diese dedizierten Vorrichtungen können auch in einem berührungsempfindlichen Display vereint sein. Ein separat vorgesehener I/O-Controller 514 sorgt für einen reibungslosen Datenaustausch zu externen Geräten. Zur Kommunikation über ein lokales oder globales Netzwerk (LAN, WAN, beispielsweise über das Internet) steht ein Netzwerkadapter 522 zur Verfügung. Auf dem Netzwerkadapter kann durch andere Komponenten des Computersystems 500 über das Bussystem 506 zugegriffen werden. Dabei versteht es sich, dass - obwohl nicht dargestellt - auch andere Vorrichtungen an das Computersystem 500 angeschlossen sein können.

Darüber hinaus können mindestens Teile des Systems zur Oberflächenqualitätsprüfung von Werkstücken 400 (vgl. Fig. 4) an das Bussystem 506 angeschlossen sein.

Die Beschreibung der verschiedenen Ausführungsbeispiele der vorliegenden Erfindung wurde zum besseren Verständnis dargestellt, dient aber nicht einer unmittelbaren Einschränkung der erfinderischen Idee auf diese Ausführungsbeispiele. Weitere Modifikationen und Variationen erschließt sich der Fachmann selbst. Die hier genutzte Terminologie wurde so gewählt, um die grundsätzlichen Prinzipien der Ausführungsbeispiele am besten zu beschreiben und sie dem Fachmann leicht zugänglich zu machen.

Das hier vorgestellte Prinzip kann sowohl als System, als Verfahren, Kombinationen davon und/oder auch als Computerprogrammprodukt verkörpert sein. Dabei kann das Computerprogrammprodukt ein (oder mehrere) Computer-lesbare/s Speichermedium/-medien aufweisen, welches Computer-lesbare Programminstruktionen aufweist, um einen Prozessor oder ein Steuerungssystem dazu zu veranlassen, verschiedene Aspekte der vorliegenden Erfindung auszuführen.

Als Medien kommen elektronische, magnetische, optische, elektromagnetische, Infrarot-Medien oder Halbleitersysteme als Weiterleitungsmedium zum Einsatz; beispielsweise SSDs (solid state device/drive als Festkörperspeicher), RAM (Random Access Memory) und/oder ROM (Read-Only Memory), EEPROM (Electrically Eraseable ROM) oder eine beliebige Kombination davon. Als Weiterleitungsmedien kommen auch sich ausbreitende elektromagnetische Wellen, elektromagnetische Wellen in Wellenleitern oder anderen Übertragungsmedien (z.B. Lichtimpulse in optischen Kabeln) oder elektrische Signale, die in Drähten übertragen werden, in Frage.

Das Computer-lesbare Speichermedium kann eine verkörpernde Vorrichtung sein, welche Instruktionen für eine Nutzung durch ein Instruktionsausführungsgerät vorhält bzw. speichert. Die Computer-lesbaren Programminstruktionen, die hier beschrieben sind, können auch auf ein entsprechendes Computersystem heruntergeladen werden, beispielsweise als (Smartphone-) App von einem Service-Provider über eine kabelbasierte Verbindung oder ein Mobilfunknetzwerk.

Die Computer-lesbaren Programminstruktionen zur Ausführung von Operationen der hier beschriebenen Erfindung können maschinenabhängig sein oder maschinenunabhängige Instruktionen, Microcode, Firmware, Status-definierende Daten oder jeglicher Source-Code oder Objektcode sein, der beispielsweise in C++, Java oder ähnlichen bzw. in konventionellen prozeduralen Programmiersprachen, wie beispielsweise der Programmiersprache "C" oder ähnlichen Programmiersprachen geschrieben sein. Die Computer-lesbaren Programm-instruktionen können komplett durch ein Computersystem ausgeführt werden. In einigen Ausführungsbeispielen können es auch elektronische Schaltkreise, wie beispielsweise programmierbare Logikschaltkreise, Feld-programmierbare Gate Arrays (FPGA) oder programmierbare Logik-Arrays (PLA), sein, die die Computer-lesbaren Programminstruktionen durch Nutzung von Statusinformationen der Computer-lesbaren Programminstruktionen ausführen, um die elektronischen Schaltkreise entsprechend Aspekten der vorliegenden Erfindung zu konfigurieren bzw. zu individualisieren.

Darüber hinaus ist die hier vorgestellte Erfindung mit Bezug auf Flussdiagramme und/oder Blockdiagramme von Verfahren, Vorrichtungen (Systemen) und Computerprogrammprodukten entsprechend Ausführungsbeispielen der Erfindung dargestellt. Es sei darauf hingewiesen, dass praktisch jeder Block der Flussdiagramme und/oder Blockdiagramme als Computer-lesbare Programminstruktionen ausgestaltet sein kann.

Die Computer-lesbaren Programminstruktionen können einem General-Purpose-Computer, einem Spezialcomputer oder einem anderweitig programmierbaren Datenverarbeitungssystem zur Verfügung gestellt werden, um eine Maschine herzustellen, so dass die Instruktionen, welche durch den Prozessor oder den Computer oder andere programmierbare Datenverarbeitungsvorrichtungen ausgeführt werden, Mittel erzeugen, um die Funktionen oder Vorgänge, die in dem Flussdiagramm und/oder Blockdiagrammen dargestellt sind, zu implementieren. Diese Computer-lesbaren Programminstruktionen können entsprechend auch auf einem Computer-lesbaren Speichermedium gespeichert werden.

In diesem Sinne kann jeder Block in dem dargestellten Flussdiagramm oder den Blockdiagrammen ein Modul, ein Segment oder Anteile an Instruktionen darstellen, welche mehrere ausführbare Instruktionen zur Implementierung der spezifischen Logikfunktion darstellt. In einigen Ausführungsbeispielen können die Funktionen, die in den einzelnen Blöcken dargestellt sind, in einer anderen Reihenfolge - gegebenenfalls auch parallel - ausgeführt werden.

Die dargestellten Strukturen, Materialien, Abläufe und Äquivalente aller Mittel und/oder Schritte mit zugehörigen Funktionen in den untenstehenden Ansprüchen sind dazu gedacht, alle Strukturen, Materialien oder Abläufe anzuwenden, wie es durch die Ansprüche ausgedrückt ist.

### BEZUGSZEICHEN

- 100: Verfahren zur Oberflächenqualitätsprüfung von Werkstücken
- 102: Verfahrensschritt zu 100
- 104: Verfahrensschritt zu 100
- 106: Verfahrensschritt zu 100
- 108: Verfahrensschritt zu 100
- 110: Verfahrensschritt zu 100
- 200: implementierungsnähere Verfahrensvariante
- 202: Verfahrensschritt zu 200
- 204: Verfahrensschritt zu 200
- 206: Verfahrensschritt zu 200
- 208: Ausschuss
- 210: 1. Gut-Kategorisierung
- 212: zweite Vermessung
- 214: 2. Gut-Kategorisierung
- 216: Ausschuss
- 218: Oberflächenqualitätsprüfung bestanden
- 220: Weiterverwendung für erneute Trainings des Klassifikatorsystems
- 300: Prinzipskizze für unterschiedliche Setups
- 302: Palette
- 304: Mehrzahl von Gut-/Schlecht-Teilen
- 306: erster Standort
- 308: Oberflächenmesssystem
- 310: Messkopf
- 312: Oberflächenmesssystem
- 314: Messkopf
- 316: zweiter (bzw. weiterer) Standort
- 400: System zur Oberflächenqualitätsprüfung
- 402: Bestimmungssystem
- 404: Speichersystem
- 406: Klassifikatorsystem
- 408: Einordnungsmodul
- 500: Computer-System
- 502: Prozessor
- 504: Speichersystem
- 506: Bussystem
- 508: RAM
- 510: ROM
- 512: Langzeitspeicher
- 514: I/O-Controller
- 516: Programmmodule, pozentielle Daten
- 518: Tastatur
- 520: Bildschirm
- 522: Netzwerkadapter

## Patentansprüche

1. Ein computer-implementiertes Verfahren (100) zur Oberflächenqualitätsprüfung von Werkstücken, das Verfahren aufweisend
- Ermitteln (104) eines ersten Satzes von Oberflächenparameterwerten eines Werkstückes basierend auf ersten gemessenen (102) Rohdaten eines Oberflächensensorsystems, wobei eine Oberflächendatengewinnung für die ersten gemessenen (102) Rohdaten hierbei einem ersten Setup, welches Einflussgrößen auf die Oberflächendatengewinnung mittels des Oberflächensensorsystems (308, 312) repräsentiert, unterliegt;
- Speichern (106) des ersten Satzes der Oberflächenparameterwerte in einem Speichermodul (404) in Form einer Oberflächenparameterwerte-Matrix, wobei der Oberflächenparameterwerte-Matrix das erste Setup zugeordnet ist;
- Klassifizieren (108) der Oberflächenparameterwerte-Matrix mittels eines trainierten Klassifikatorsystems (406) des zugehörigen Setup in Qualitätsklassen, wobei die Qualitätsklassen eine erste Gut-Klasse, eine erste Unentschieden-Klasse und eine erste Schlecht-Klasse aufweisen, wobei die Qualitätsklassen nicht überlappend sind, und wobei das Klassifikatorsystem (406) mittels annotierter Trainingsdaten trainiert wurde, um ein Klassifikationsmodell zu bilden, um eine Oberflächenparameterwerte-Matrix einer von einer Mehrzahl von vordefinierten Klassen zuzuordnen,
- Ermitteln (112) eines zweiten Satzes von Oberflächenparameterwerten für das Werkstück für ein zweites Setup basierend auf zweiten gemessenen (110) Rohdaten eines zweiten Oberflächensensorsystems für die Unentschieden-Klasse des ersten Setup und
- Einordnen (114) der Oberflächenparameter-Matrix des Werkstückes in eine zweite Gut-Klasse oder eine zweite Schlecht-Klasse basierend auf dem ermittelten zweiten Satz von Oberflächenparameterwerten.

2. Das Verfahren (100) gemäß Anspruch 1, zusätzlich aufweisend
- Speichern des ermittelten zweiten Satzes von Oberflächenparameterwerten des zweiten Setup als zusätzliche Trainingsdaten zum erweiterten Training des Klassifikatorsystems (406), wobei die zweite Gut-Klasse und die zweite Schlecht-Klasse als Annotation für die gespeicherte Messdaten-Matrix verwendet wird.

3. Das Verfahren (100) gemäß Anspruch 1 oder 2, zusätzlich aufweisend
- Einordnen der Oberflächenparameter-Matrix in eine dritte Gut-Klasse, wenn einer der ermittelten ersten Oberflächenparameterwerten des ersten Satzes unterhalb eines vordefinierten Schwellwertes liegt.

4. Das Verfahren (100) gemäß einem der vorangegangenen Ansprüche, wobei das Klassifikatorsystem (406) ausgewählt ist aus der Gruppe bestehend aus Support Vector Machine, Random Forest, Boosting, Gradient Boosting, Gaussian Process, Nearest Neighbor und neuronales Netzwerk.

5. Das Verfahren (100) gemäß Anspruch 4, wobei das neuronale Netzwerk ein Deep Neural Network ist.

6. Das Verfahren (100) gemäß einem der vorangegangenen Ansprüche, wobei das erste (308, 312) und das zweite Oberflächensensorsystem einen taktilen Sensor und/oder einen optischen Sensor aufweisen, die jeweils 2-dimensionale und/oder 3-dimensionale Daten aufnehmen.

7. Das Verfahren (100) gemäß einem der vorangegangenen Ansprüche, wobei die Oberflächenparameterwerte eine Rauheit, eine Welligkeit und/oder eine Form charakterisieren.

8. Das Verfahren (100) gemäß Anspruch 7, wobei die Oberflächenparameterwerte Kategorien zuordenbar sind, die aus Rauheitsparametern einer Gruppe ausgewählt sind, die folgendes aufweist: Parameter der beschreibenden Statistik, Materialanteilskurve, arithmetische Rauheitsparameter, Parameter der Gesamthöhe, optisch ermittelte Flächenparameter, in vorbestimmte Frequenzbänder transformierte Profildaten, Parameter basierend auf Mustererkennung.

9. Das Verfahren (100) gemäß einem der vorangegangenen Ansprüche, bei dem die Schlecht-Klasse eine Mehrzahl von unterschiedlichen Schlecht-Klassen ist.

10. Das Verfahren (100) gemäß einem der vorangegangenen Ansprüche, bei dem Umgebungsparameter eines Setup ausgewählt sind aus einer Gruppe bestehend aus Standort des Oberflächensensorsystems, Trägersystem für das Oberflächensensorsystem, Temperatur und Luftfeuchtigkeit, Messgeschwindigkeit und Art der Schwingungsisolation.

11. Das Verfahren (100) gemäß einem der vorangegangenen Ansprüche, bei dem jeweilige Rohdaten einer Oberfläche oder einer Mehrzahl von Oberflächen zugehörig sind.

12. Ein computer-implementiertes Verfahren (200) zur Oberflächenqualitätsprüfung von Werkstücken, das Verfahren aufweisend
- Ermitteln (204) eines ersten Satzes von Oberflächenparameterwerten eines Werkstückes basierend auf ersten gemessenen (102) Rohdaten eines Oberflächensensorsystems, wobei eine Oberflächendatengewinnung für die ersten (102) gemessenen Rohdaten hierbei einem ersten Setup, welches Einflussgrößen auf die Oberflächendatengewinnung mittels des Oberflächensensorsystems (308, 312) repräsentiert, unterliegt;
- Speichern des ersten Satzes der Oberflächenparameterwerte in einem Speichermodul (404) in Form einer Oberflächenparameterwerte-Matrix, wobei der Oberflächenparameterwerte-Matrix das erste Setup zugeordnet ist;
- Klassifizieren (206) der Oberflächenparameterwerte-Matrix mittels eines trainierten Klassifikatorsystems (406) des zugehörigen Setup in Qualitätsklassen, wobei die Qualitätsklassen eine erste Gut-Klasse und eine erste Schlecht-Klasse aufweisen, wobei die Qualitätsklassen nicht überlappend sind, und wobei das Klassifikatorsystem (406) mittels annotierter Trainingsdaten trainiert wurde, um ein Klassifikationsmodell zu bilden, um eine Oberflächenparameterwerte-Matrix einer von einer Mehrzahl von vordefinierten Klassen zuzuordnen,
- Ermitteln eines zweiten Satzes von Oberflächenparameterwerten für das Werkstück für ein zweites Setup basierend auf zweiten (212) gemessenen Rohdaten eines zweiten Oberflächensensorsystems für eine Oberflächenparameterwerte-Matrix des ersten Setup, deren Konfidenzwert für die Gut-Klasse in einem vordefinierten Werte-Korridor liegt und
- Einordnen der Oberflächenparameter-Matrix für das Werkstück in eine zweite Gut-Klasse oder eine zweite Schlecht-Klasse basierend auf dem ermittelten zweiten Satz von Oberflächenparameterwerten.

13. Ein System zur Oberflächenqualitätsprüfung von Werkstücken, das System aufweisend
- ein Bestimmungssystem (402), das angepasst ist zum Ermitteln eines ersten Satzes von Oberflächenparameterwerten eines Werkstückes basierend auf ersten gemessenen Rohdaten eines Oberflächensensorsystems, wobei eine Oberflächendatengewinnung für die ersten gemessenen Rohdaten hierbei einem ersten Setup, welches Einflussgrößen auf die Oberflächendatengewinnung mittels des Oberflächensensorsystems repräsentiert, unterliegt;
- eine Speichersystem (404), das angepasst ist zum Speichern des ersten Satzes der Oberflächenparameterwerte in einem Speichermodul in Form einer Oberflächenparameterwerte-Matrix, wobei der Oberflächenparameterwerte-Matrix das erste Setup zugeordnet ist;
- ein trainiertes Klassifikatorsystem (406), das angepasst ist zum Klassifizieren der Oberflächenparameterwerte-Matrix in Qualitätsklassen, wobei das trainierte Klassifikatorsystems (406) einem Setup zugeordnet ist, und wobei die Qualitätsklassen eine erste Gut-Klasse, eine erste Unentschieden-Klasse und eine erste Schlecht-Klasse aufweisen, wobei die Qualitätsklassen nicht überlappend sind, und wobei das trainierte Klassifikatorsystem (406) mittels annotierter Trainingsdaten trainiert wurde, um ein Klassifikationsmodell zu bilden, um eine Oberflächenparameterwerte-Matrix einer von einer Mehrzahl von vordefinierten Klassen zuzuordnen,
- wobei das Bestimmungssystem (402) auch angepasst ist zum Ermitteln eines zweiten Satzes von Oberflächenparameterwerten für das Werkstück für ein zweites Setup basierend auf zweiten gemessenen Rohdaten eines zweiten Oberflächensensorsystems für die Unentschieden-Klasse des ersten Setup, und
- ein Einordnungsmodul (408), das angepasst ist zum Einordnen der Oberflächenparameter-Matrix in eine zweite Gut-Klasse oder eine zweite Schlecht-Klasse basierend auf dem ermittelten zweiten Satz von Oberflächenparameterwerten.

14. Ein Computerprogrammprodukt zur Oberflächenqualitätsprüfung von Werkstücken, wobei das Computerprogrammprodukt ein Computer-lesbares Speichermedium aufweist, welches darauf gespeicherte Programminstruktionen aufweist, wobei die Programminstruktionen durch einen oder mehrere Computer (500) oder Steuereinheiten ausführbar sind und den einen oder die mehreren Computer oder Steuereinheiten dazu veranlasst, das Verfahren (100) entsprechend einem der Ansprüche 1 bis 11 auszuführen.

## Claims

1. Computer-implemented method (100) for inspecting the surface quality of workpieces, the method comprising
- determining (104) a first set of surface parameter values of a workpiece on the basis of first measured (102) raw data from a surface sensor system, wherein surface data acquisition for the first measured (102) raw data is subject in this case to a first setup representing variables influencing the surface data acquisition by means of the surface sensor system (308, 312);
- storing (106) the first set of surface parameter values in a storage module (404) in the form of a surface parameter value matrix, wherein the first setup is assigned to the surface parameter value matrix;
- classifying (108) the surface parameter value matrix into quality classes by means of a trained classifier system (406) of the associated setup, wherein the quality classes comprise a first good class, a first undecided class and a first poor class, wherein the quality classes do not overlap, and wherein the classifier system (406) was trained by means of annotated training data in order to form a classification model in order to assign a surface parameter value matrix to one of a plurality of predefined classes,
- determining (112) a second set of surface parameter values for the workpiece for a second setup on the basis of second measured (110) raw data from a second surface sensor system for the undecided class of the first setup, and
- categorizing (114) the surface parameter matrix of the workpiece into a second good class or a second poor class on the basis of the determined second set of surface parameter values.

2. Method (100) according to Claim 1, additionally comprising
- storing the determined second set of surface parameter values of the second setup as additional training data for the extended training of the classifier system (406), wherein the second good class and the second poor class are used as an annotation for the stored measurement data matrix.

3. Method (100) according to Claim 1 or 2, additionally comprising
- categorizing the surface parameter matrix into a third good class if one of the determined first surface parameter values in the first set is below a predefined threshold value.

4. Method (100) according to one of the preceding claims, wherein the classifier system (406) is selected from the group consisting of support vector machine, random forest, boosting, gradient boosting, Gaussian process, nearest neighbour and neural network.

5. Method (100) according to Claim 4, wherein the neural network is a deep neural network.

6. Method (100) according to one of the preceding claims, wherein the first surface sensor system (308) and the second surface sensor system (312) have a tactile sensor and/or an optical sensor which each capture two-dimensional and/or three-dimensional data.

7. Method (100) according to one of the preceding claims, wherein the surface parameter values characterize a roughness, a waviness and/or a shape.

8. Method (100) according to Claim 7, wherein the surface parameter values can be assigned to categories which are selected from roughness parameters in a group comprising the following: parameters of the descriptive statistics, material ratio curve, arithmetic roughness parameters, parameters of the overall height, optically determined surface parameters, profile data transformed into predetermined frequency bands, parameters based on pattern recognition.

9. Method (100) according to one of the preceding claims, in which the poor class is a plurality of different poor classes.

10. Method (100) according to one of the preceding claims, in which environmental parameters of a setup are selected from a group consisting of the location of the surface sensor system, a carrier system for the surface sensor system, the temperature and air humidity, the measurement speed and the type of vibration isolation.

11. Method (100) according to one of the preceding claims, in which respective raw data belong to a surface or a plurality of surfaces.

12. Computer-implemented method (200) for inspecting the surface quality of workpieces, the method comprising
- determining (204) a first set of surface parameter values of a workpiece on the basis of first measured (102) raw data from a surface sensor system, wherein surface data acquisition for the first (102) measured raw data is subject in this case to a first setup representing variables influencing the surface data acquisition by means of the surface sensor system (308, 312);
- storing the first set of surface parameter values in a storage module (404) in the form of a surface parameter value matrix, wherein the first setup is assigned to the surface parameter value matrix;
- classifying (206) the surface parameter value matrix into quality classes by means of a trained classifier system (406) of the associated setup, wherein the quality classes comprise a first good class and a first poor class, wherein the quality classes do not overlap, and wherein the classifier system (406) was trained by means of annotated training data in order to form a classification model in order to assign a surface parameter value matrix to one of a plurality of predefined classes,
- determining a second set of surface parameter values for the workpiece for a second setup on the basis of second (212) measured raw data from a second surface sensor system for a surface parameter value matrix of the first setup, the confidence value of which for the good class is in a predefined value corridor, and
- categorizing the surface parameter matrix for the workpiece into a second good class or a second poor class on the basis of the determined second set of surface parameter values.

13. System for checking the surface quality of workpieces, the system comprising
- a determination system (402) which is adapted to determine a first set of surface parameter values of a workpiece on the basis of first measured raw data from a surface sensor system, wherein surface data acquisition for the first measured raw data is subject in this case to a first setup representing variables influencing the surface data acquisition by means of the surface sensor system;
- a storage system (404) which is adapted to store the first set of surface parameter values in a storage module in the form of a surface parameter value matrix, wherein the first setup is assigned to the surface parameter value matrix;
- a trained classifier system (406) which is adapted to classify the surface parameter value matrix into quality classes, wherein the trained classifier system (406) is assigned to a setup, and wherein the quality classes comprise a first good class, a first undecided class and a first poor class, wherein the quality classes do not overlap, and wherein the trained classifier system (406) was trained by means of annotated training data in order to form a classification model in order to assign a surface parameter value matrix to one of a plurality of predefined classes,
- wherein the determination system (402) is also adapted to determine a second set of surface parameter values for the workpiece for a second setup on the basis of second measured raw data from a second surface sensor system for the undecided class of the first setup, and
- a categorization module (408) which is adapted to categorize the surface parameter matrix into a second good class or a second poor class on the basis of the determined second set of surface parameter values.

14. Computer program product for inspecting the surface quality of workpieces, wherein the computer program product has a computer-readable storage medium having program instructions stored thereon, wherein the program instructions can be executed by one or more computers (500) or control units and cause the one or more computers or control units to carry out the method (100) according to one of Claims 1 to 11.

## Revendications

1. Procédé informatisé (100) d'inspection de la qualité de surface de pièces, le procédé comportant les étapes suivantes :
- déterminer (104) un premier ensemble de valeurs de paramètres de surface d'une pièce sur la base de premières données brutes mesurées (102) d'un système de capteurs de surface, l'acquisition de données de surface étant soumise, pour les premières données brutes mesurées (102), à une première configuration qui représente des grandeurs d'influence influant sur l'acquisition de données de surface au moyen du système de capteurs de surface (308, 312) ;
- mémoriser (106) le premier ensemble de valeurs de paramètres de surface dans un module de mémorisation (404) sous la forme d'une matrice de valeurs de paramètres de surface, la matrice de valeurs de paramètres de surface étant associée à la première configuration ;
- classer (108) la matrice de valeurs de paramètres de surface au moyen d'un système de classification par apprentissage (406) de la configuration associée en classes de qualité, les classes de qualité comportant une première classe Bon, une première classe Indéterminé et une première classe Médiocre, les classes de qualité ne se chevauchant pas, et le système de classification (406) ayant fait l'objet d'un apprentissage à l'aide de données d'apprentissage annotées afin de former un modèle de classification permettant d'associer une matrice de valeurs de paramètres de surface à une classe parmi une pluralité de classes prédéfinies,
- déterminer (112) un deuxième ensemble de valeurs de paramètres de surface pour la pièce et une deuxième configuration sur la base de deuxièmes données brutes mesurées (110) d'un deuxième système de capteurs de surface pour la classe Indéterminé de la première configuration et
- classer (114) la matrice de paramètres de surface de la pièce dans une deuxième classe Bon ou une deuxième classe Médiocre sur la base du deuxième ensemble déterminé de valeurs de paramètres de surface.

2. Procédé (100) selon la revendication 1, comportant en outre l'étape suivante :
- mémoriser le deuxième ensemble déterminé de paramètres de surface pour la deuxième configuration comme données d'apprentissage supplémentaires destinées à l'apprentissage étendu du système de classification (406), la deuxième classe Bon et la deuxième classe Médiocre étant utilisées comme annotation pour la matrice de données de mesure mémorisée.

3. Procédé (100) selon la revendication 1 ou 2, comportant en outre l'étape suivante :
- classer la matrice de paramètres de surface dans une troisième classe Bon si l'une des premières valeurs de paramètres de surface déterminées du premier ensemble est inférieure à une valeur seuil prédéfinie.

4. Procédé (100) selon l'une des revendications précédentes, le système de classification (406) étant sélectionné dans le groupe comprenant un Support Vector Machine (machine à vecteurs de support), un Random Forest (forêt d'arbres décisionnels), un Boosting (amplification), un Gradient Boosting (amplification de gradient), un Gaussian Process (processus gaussien), Nearest Neighbor (Voisin le plus proche), et un réseau de neurones.

5. Procédé (100) selon la revendication 4, le réseau de neurones étant un Deep Neural Network (réseau de neurones profond).

6. Procédé (100) selon l'une des revendications précédentes, le premier (308, 312) et le deuxième système de capteurs de surface comportant un capteur tactile et/ou un capteur optique qui acquièrent chacun des données bidimensionnelles et/ou tridimensionnelles.

7. Procédé (100) selon l'une des revendications précédentes, les valeurs des paramètres de surface caractérisant une rugosité, une ondulation et/ou une forme.

8. Procédé (100) selon la revendication 7, les valeurs de paramètres de surface pouvant être associées à des catégories qui sont sélectionnées parmi les paramètres de rugosité d'un groupe qui comporte : des paramètres de statistiques descriptives, une courbe de teneur en matériau, des paramètres de rugosité arithmétiques, des paramètres de hauteur totale, des paramètres de surface déterminés optiquement, des données de profil transformées en bandes de fréquences prédéterminées, des paramètres basés sur la reconnaissance de formes.

9. Procédé (100) selon l'une des revendications précédentes, la classe Médiocre étant une pluralité de classes Médiocre différentes.

10. Procédé (100) selon l'une des revendications précédentes, dans lequel des paramètres d'environnement d'une configuration sont sélectionnés dans un groupe comprenant l'emplacement du système de capteurs de surface, le système porteur destiné au système de capteurs de surface, la température et l'humidité de l'air, la vitesse de mesure et le type d'isolation antivibratoire.

11. Procédé (100) selon l'une des revendications précédentes, dans lequel des données brutes respectives sont associées à une surface ou une pluralité de surfaces.

12. Procédé informatisé (200) d'inspection de la qualité de surface de pièces, le procédé comportant les étapes suivantes :
- déterminer (204) un premier ensemble de valeurs de paramètres de surface d'une pièce sur la base de premières données brutes mesurées (102) d'un système de capteurs de surface, l'acquisition de données de surface étant soumise, pour les premières données brutes mesurées (102), à une première configuration qui représente des grandeurs d'influence influant sur l'acquisition de données de surface au moyen du système de capteurs de surface (308, 312) ;
- mémoriser le premier ensemble de valeurs de paramètres de surface dans un module de mémorisation (404) sous la forme d'une matrice de valeurs de paramètres de surface, la matrice de valeurs de paramètres de surface étant associée à la première configuration ;
- classer (206) la matrice de valeurs de paramètres de surface au moyen d'un système de classification par apprentissage (406) de la configuration associée en classes de qualité, les classes de qualité comportant une première classe Bon et une première classe Médiocre, les classes de qualité ne se chevauchant pas, et le système de classification (406) ayant fait l'objet d'un apprentissage à l'aide de données d'apprentissage annotées afin de former un modèle de classification permettant d'associer une matrice de valeurs de paramètres de surface à une classe parmi une pluralité de classes prédéfinies,
- déterminer un deuxième ensemble de valeurs de paramètres de surface pour la pièce et une deuxième configuration sur la base de deuxièmes données brutes mesurées (212) d'un deuxième système de capteurs de surface pour une matrice de valeurs de paramètres de surface de la première configuration dont la valeur de confiance est située pour la classe Bon dans un couloir de valeurs prédéfini et
- classer la matrice de paramètres de surface pour la pièce dans une deuxième classe Bon ou une deuxième classe Médiocre sur la base du deuxième ensemble déterminé de valeurs de paramètres de surface.

13. Système d'inspection de qualité de surface de pièces, le système comportant
- un système de détermination (402) qui est adapté pour déterminer un premier ensemble de valeurs de paramètres de surface d'une pièce sur la base de premières données brutes mesurées d'un système de capteurs de surface, l'acquisition de données de surface pour les premières données brutes mesurées étant soumise à une première configuration qui représente des grandeurs d'influence influant sur l'acquisition de données de surface au moyen du système de capteurs de surface ;
- un système de mémorisation (404) qui est adapté pour mémoriser le premier ensemble de valeurs de paramètres de surface dans un module de mémorisation sous la forme d'une matrice de valeurs de paramètres de surface, la matrice de valeurs de paramètres de surface étant associée à la première configuration ;
- un système de classification par apprentissage (406) qui est adapté pour classer la matrice de valeurs de paramètres de surface en classes de qualité, le système de classification par apprentissage (406) étant associé à une configuration, et les classes de qualité comportant une première classe Bon, une première classe Indéterminé et une première classe Médiocre, les classes de qualité ne se chevauchant pas, et le système de classification par apprentissage (406) ayant fait l'objet d'un apprentissage à l'aide de données d'apprentissage annotées afin de former un modèle de classification permettant d'associer une matrice de valeurs de paramètres de surface à une clase parmi une pluralité de classes prédéfinies,
- le système de détermination (402) étant également adapté pour déterminer un deuxième ensemble de valeurs de paramètres de surface pour la pièce et une deuxième configuration sur la base de deuxièmes données brutes mesurées d'un deuxième système de capteurs de surface pour la classe Indéterminé de la première configuration, et
- un module de classification (408) qui est adapté pour classer la matrice de paramètres de surface dans une deuxième classe Bon ou une deuxième classe Médiocre sur la base du deuxième ensemble déterminé de valeurs de paramètres de surface.

14. Progiciel destiné à l'inspection de la qualité de surface de pièces, le progiciel comportant un support de stockage lisible par ordinateur sur lequel sont stockées des instructions de programme, les instructions de programme pouvant être exécutées par un ou plusieurs ordinateurs (500) ou une ou plusieurs unités de commande et ordonnant à l'un ou à la pluralité des ordinateurs ou à l'une ou à la pluralité des unités de commande de mettre œuvre le procédé (100) selon l'une des revendications 1 à 11.
